# EUROPÄISCHE PATENTSCHRIFT

(11) **EP 2 078 451 B1**
(45) Veröffentlichungstag und Bekanntmachung des Hinweises auf die Patenterteilung: **02.05.2018**
(21) Anmeldenummer: 08166518.4
(22) Anmeldetag: 14.10.2008
(51) Int. Cl.: A01D 41/12

(54) **Mähdrescher**
Combine harvester
Moissonneuse-batteuse

(30) Priorität: 10.01.2008 DE 102008003758
(43) Veröffentlichungstag der Anmeldung: 15.07.2009
(73) Patentinhaber: CLAAS Selbstfahrende Erntemaschinen GmbH, 33428 Harsewinkel (DE)
(72) Erfinder: Claes, Ulrich, 49201 Dissen (DE); Vieregge, Christopher, 32694 Dörentrup (DE)

(56) Entgegenhaltungen:
- EP-A1- 0 528 310
- EP-A1- 1 425 953
- WO-A1-2006/007626
- DE-A1- 19 606 730
- US-A- 6 125 618
- US-A1- 2006 104 770
- US-B1- 6 339 917

## Beschreibung

Die Erfindung betrifft einen Mähdrescher nach dem Oberbegriff des Anspruchs 1.

Aus der Praxis bekannte Mähdrescher sind in der Regel immer mit einem zur Zwischenspeicherung des Erntegutes während der Einsatzfahrt dienenden Korntank und einer dem Korntank zugeordneten Entleervorrichtung ausgestattet. Die Entleervorrichtung besteht aus einem an dem Mähdrescher angeordneten Auslaufrohr, welches von einer Transportstellung in eine Arbeitsstellung verschwenkt werden kann, wobei es in Transportstellung im Wesentlichen in die Geometrie des Mähdreschergehäuses integriert an diesem anliegt und das Auslassende des Auslaufrohres in Arbeitsstellung so weit von dem Mähdrescher abragt, dass ein neben dem Mähdrescher befindliches Transportfahrzeug beladen werden kann. Zur Förderung des Erntegutes aus dem Korntank ist in dem Auslaufrohr eine antreibbare Fördereinrichtung angeordnet. Ein derartiger Mähdrescher ist beispielsweise aus der DE 196 06 730 A1 bekannt.

Ein Mähdrescher gemäß dem Oberbegriff des Anspruches 1 ist aus der EP 1 425 953 A1 bekannt. Der Mähdrescher umfasst zum Entleeren eines Korntanks des Mähdreschers einen Entladeförderer, welcher zur Reinigung des Korntanks mit einer Geschwindigkeit betreibbar ist, die kleiner als die Betriebsgeschwindigkeit ist.

Auch die Druckschrift US 6,125 618 A offenbart einen Mähdrescher mit einer im Auslaufrohr angeordneten Fördereinrichtung. Eine Fördergeschwindigkeit der Fördereinrichtung ist mittels eines Joysticks manuell einstellbar.

Bei modernen Mähdreschern steigt die Erntegutdurchsatzleistung immer weiter an, so dass pro Zeiteinheit eine größere Erntegutmenge geerntet wird. Dies führt dazu, dass auch die Förderleistung der Entleervorrichtung immer weiter gesteigert wird, welche beispielsweise über 100 Liter pro Sekunde betragen kann. Eine derart hohe Förderleistung hat den Vorteil, dass der Korntank sowohl im Stillstand des Mähdreschers als auch während der Einsatzfahrt in kürzester Zeit entleert werden kann. Hieraus ergibt sich jedoch der Nachteil, dass insbesondere wenn das Transportvolumen des Transportfahrzeuges kleiner als das zu überladene Erntegutvolumen ist, eine vollständige Beladung des Transportfahrzeuges nicht möglich ist, da der Überladevorgang vom Bediener des Mähdreschers frühzeitig gestoppt werden muss, um ein "Überlaufen" des Transportfahrzeuges und somit einen Erntegutverlust zu verhindern. Da die Transportwege zwischen abzuerntendem Feld und Lager- oder Weiterverarbeitungsstandort für das Erntegut jedoch häufig sehr groß sind, ist es aus betriebswirtschaftlichen Gründen wünschenswert, das Transportvolumen der Transportfahrzeuge möglichst vollständig auszuschöpfen. Dies ist aus den genannten Gründen mit derzeit bekannten Mähdreschern nicht möglich.

Aufgabe der vorliegenden Erfindung ist es, die beschriebenen Nachteile des Standes der Technik zu vermeiden und insbesondere einen Mähdrescher gemäß des Oberbegriffs des Anspruchs 1 derart weiterzubilden, dass eine einfache und gezielt steuerbare, sowie schnelle Überladung des Erntegutes in ein Transportfahrzeug ermöglicht wird.

Diese Aufgabe wird erfindungsgemäß durch die Merkmale des Anspruchs 1 gelöst.

Dadurch, dass die Fördergeschwindigkeit der Fördereinrichtung variabel einstellbar ist, kann sie je nach Einsatzbedingungen eingestellt werden, so dass das Transportvolumen von Transportfahrzeugen vollständig nutzbar ist.

Dabei ist die Fördergeschwindigkeit der Fördereinrichtung insbesondere während des Erntebetriebes des Mähdreschers variabel einstellbar, so dass die Fördergeschwindigkeit nicht von der im Erntebetrieb in der Regel maximalen Motordrehzahl des Antriebsmotors des Mähdreschers abhängt. Somit ist es möglich, einen parallelen Überladeprozess während des Erntebetriebes gezielt variabel zu steuern.

Weiterhin ist die Fördergeschwindigkeit der Fördereinrichtung vor dem Einschalten der Fördereinrichtung vorwählbar und/oder sie ist während des Betreibens der Fördereinrichtung veränderbar. Somit ist es beispielsweise möglich, bei Transportfahrzeugen mit kleinem Transportvolumen eine niedrigere Fördergeschwindigkeit als bei Transportfahrzeugen mit großem Transportvolumen zu wählen, so dass auch kleinere Transportfahrzeuge möglichst vollständig gefüllt werden können, ohne dass die Gefahr eines Überlaufens aufgrund einer hohen Fördergeschwindigkeit besteht. Zusätzlich oder alternativ ist es beispielsweise möglich, dass zu Beginn des Überladevorganges eine hohe Fördergeschwindigkeit gewählt wird, um ein möglichst großes Erntegutvolumen in kürzester Zeit zu überladen, und dass die Fördergeschwindigkeit reduziert wird, sobald das Transportvolumen des Transportfahrzeuges nahezu vollständig ausgeschöpft ist, um das restliche zur Verfügung stehende Transportvolumen gezielt mit geringerer Fördergeschwindigkeit zu füllen, um das Transportvolumen des Transportfahrzeuge möglichst vollständig auszuschöpfen, ohne dass es zu einem Überlaufen des Transportfahrzeuges kommt.

Erfindungsgemäß erfolgt die Auswahl und/oder die Anpassung der Fördergeschwindigkeit der Fördereinrichtung selbsttätig durch eine auf dem Mähdrescher befindliche Steuereinheit. Eine selbsttätige Auswahl und/oder Anpassung durch eine auf dem Mähdrescher befindliche Steuereinheit hat den Vorteil, dass der Bediener von der Einstellung entlastet wird und die Steuereinheit stets die für die jeweiligen Einsatzbedingungen optimalen Einstellungen für die Fördergeschwindigkeit auswählt.

Bei einer selbsttätigen Auswahl und/oder Anpassung der Fördergeschwindigkeit erfolgt diese in Abhängigkeit von Sensordaten, die der auf dem Mähdrescher befindlichen Steuereinheit eine von den Einsatzbedingungen abhängige Auswahl und/oder Anpassung ermöglicht, so dass der Bediener noch weiter von der Einstellung entlastet wird. Die Sensordaten werden mittels eines bilderfassenden Sensors, beispielsweise einer Kamera, mit entsprechender Bildauswertung erzeugt, so dass das Sensorsystem beispielsweise den Füllgrad des Transportfahrzeuges erfasst und die Fördergeschwindigkeit anhand des durch die Steuereinheit ausgewerteten Restfüllvolumen des Transportfahrzeuges anpasst. Alternativ oder zusätzlich sind weitere Sensorbauformen zur Erfassung des Füllgrades des Transportfahrzeuges denkbar.

Ein einfacher Aufbau des Mähdreschers wird vorteilhaft dadurch erzielt, dass die Fördergeschwindigkeit der Fördereinrichtung in Stufen einstellbar ist. Alternativ ist die Fördergeschwindigkeit stufenlos einstellbar, um in Abhängigkeit der Einsatzbedingungen eine möglichst variable Einstellung zu ermöglichen.

Ein konstruktiv einfacher Aufbau der Einstellung der Fördergeschwindigkeit der Fördereinrichtung wird bei einer vorteilhaften Weiterbildung der Erfindung dadurch erreicht, dass sie mittels eines Getriebes erfolgt. Hierbei kann das Getriebe zwischen der Fördereinrichtung und ihrer Antriebseinheit angeordnet sein. Ein derartiger Aufbau ermöglicht eine Einstellung der Fördergeschwindigkeit unabhängig von der Antriebsgeschwindigkeit des der Fördereinrichtung zugeordneten Antriebes. Das Getriebe ist vorteilhaft als Lastschaltgetriebe ausgebildet, so dass während des Betriebes der Fördereinrichtung eine Geschwindigkeitsänderung vorgenommen werden kann. Eine konstruktive einfache Ausbildung des Getriebes stellt ein Variator-Getriebe dar.
Vorteilhaft wird die Fördereinrichtung durch zumindest eine Förderschnecke und/oder zumindest ein endlos umlaufendes Förderband gebildet.
Der Antrieb der Fördereinrichtung erfolgt vorteilhaft mechanisch, hydraulisch und/oder elektromotorisch. Ein mechanischer Antrieb kann beispielsweise mit dem Antriebsmotor des Mähdreschers verbunden sein. Alternativ oder in beliebiger Kombination kann der Fördereinrichtung ein Hydraulikmotor und/oder ein Elektromotor zugeordnet sein. Anhand der beigefügten Zeichnung wird die Erfindung nachfolgend näher erläutert.
Es zeigt:

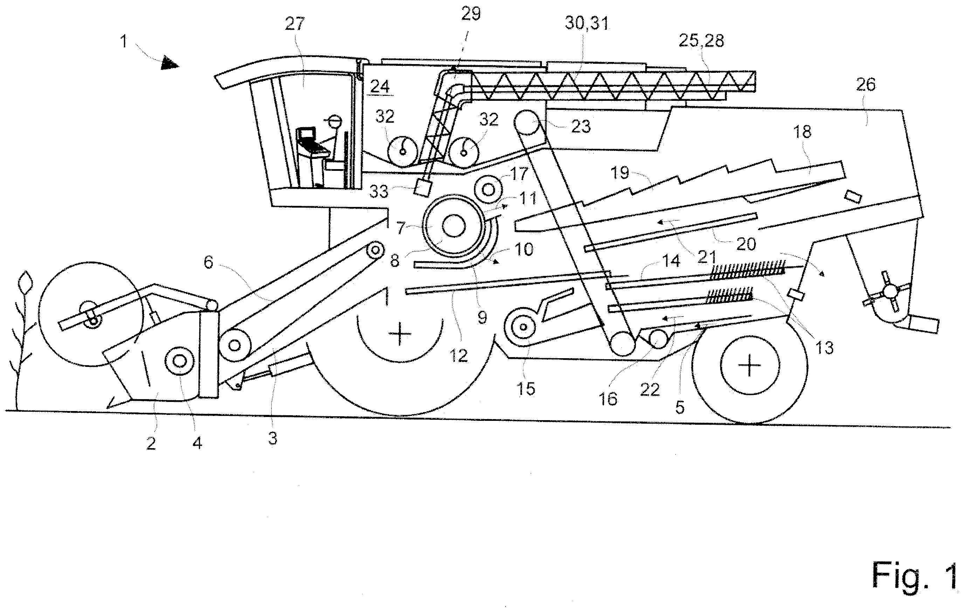

Fig. 1 :eine schematische Seitenansicht eines erfindungsgemäßen Mähdreschers.
Der in Fig. 1 schematisch dargestellte Mähdrescher 1 besteht aus einem mit dem Fahrwerk verbundenen Traggestell, auf dem ein mehrteiliges Maschinengehäuse 26 befestigt ist. Um den Fahrer des Mähdreschers 1 vor belastenden Umwelteinflüssen zu schützen, ist im frontseitigen Bereich eine geschlossene Fahrerkabine 27 angeordnet. Der Mähdrescher 1 nimmt ein Getreideschneidwerk 2 auf, welches in an sich bekannter weise mit dem Schrägförderer 3 des Mähdreschers 1 verbunden ist. Das Querförderorgan 4 des Schneidwerkes 2 übergibt das Erntegut an den Schrägförderer 3, wobei dieser das Erntegut mittels umlaufendem Förderer 6 in seinem obenseitigen rückwärtigen Bereich an das Dreschwerk 7 des Mähdreschers 1 übergibt. In dem ein- oder mehrtrommelig ausgeführten Dreschwerk 7 wird das Erntegut zwischen den Dreschtrommeln 8 und einem diese wenigstens teilweise ummantelnden Dreschkorb 9 hindurchgeführt und in zumindest zwei Teilströme 10, 11 getrennt. Der erste Teilstrom 10 besteht im Wesentlichen aus Körnern , Kurzstroh und Spreu und wird über einen Vorbereitungsboden 12 unmittelbar einer aus verschiedenen Siebebenen 13 bestehenden Reinigungseinheit 14 zugeführt. Die Reinigungseinheit 14 nimmt zudem eine Gebläseeinheit 15 auf, die einen die Siebebenen 13 durchsetzenden Luftstrom generiert.
Der im rückwärtigen Bereich des Dreschwerks 7 aus diesem austretende weitere, im Wesentlichen aus Stroh und einem Restkornanteit bestehende Teilstrom 11 wird mittels einer Strohleittrommel 17 auf ein als Hordenschüttler 18 ausgeführtes Abscheideorgan 19 geleitet. Durch die Bewegung des Hordenschüttfers 18 wird ein großer Anteil der in der Strohschicht enthaltenen Körner 21 auf dem Hordenschüttler 18 abgeschieden und über einen sogenannten Rücklaufboden 20 und den Vorbereitungsboden 12 an die Reinigungseinheit 14 übergeben.
In der Reinigungseinheit 14 wird schließlich aus den in sie eingeleiteten verschiedenen Gutströmen 10, 21 ein gereinigter Körnerstrom 22 mittels Förderelevatoren 23 in einen Korntank 24 gefördert und dort zwischengespeichert. Die Entleerung des Korntanks 24 erfolgt in mittels einer Entleervorrichtung 25.
Der die Reinigungseinheit 14 zusätzlich verlassende und als Überkehrgutstrom 5 bezeichnete Massestrom besteht zum Einen aus Teilen des Erntegutes, die schwerer sind als die Spreu und auch schwerer als die Körner 21,22 selbst, so dass sie nicht von der Gebläseeinheit 15 aus dem Siebkasten geblasen werden können. Das sind unausgedroschene Ähren oder ungenügend entgrannte Körner, die deshalb erneut gedroschen werden müssen. Zum Anderen befinden sich aber auch einzelne Körner in dem Überkehrgutstrom 5. Der Überkehrgutstrom 5 wird durch eine Fördereinrichtung 16 dem Dreschwerk 7 erneut zugeführt.

Die Entleervorrichtung 25 besteht aus einem Auslaufrohr 28, welches um eine Achse 29 herum von einer in Figur 1 dargestellten Transportstellung in eine Arbeitsstellung verschwenkbar ist, wobei die Arbeitsstellung beispielsweise in etwa rechtwinklig zur Zeichnungsebene liegt. In dem Auslaufrohr ist eine als mehrteilige Förderschnecke 30 ausgebildete Fördereinrichtung 31 angeordnet. Bei der Entleerung des Korntanks 24 wird das Erntegut mittels zweier in dem Korntank 24 angeordneten Querschnecken 32 der Förderschnecke 30 zugeführt. Zur Anpassung der Fördergeschwindigkeit der Förderschnecke 30 ist diese mit einem Getriebe 33 wirkverbunden, weiches die Antriebsenergie eines hier nicht dargestellten Antriebes auf die Förderschnecke 30 überträgt. Das Getriebe 33 ist beispielsweise als stufenloses Lastschaltgetriebe ausgebildet, so dass die Fördergeschwindigkeit der Förderschnecke 30 während ihres Betriebes variabel stufenlos veränderbar ist Dies hat den Vorteil, dass die Entleergeschwindigkeit und somit die Förderleistung bzw. das Fördervolumen der Fördereinrichtung 31 je nach Betriebsbedingungen anpassbar ist. Insbesondere während des Erntebetriebes des Mähdreschers 1 kann somit ein paralleler Überladeprozess des Erntegutes gezielt gesteuert werden.

**Bezugszeichenliste:**

| | | | |
|---|---|---|---|
| 1 | Mähdrescher | 30 | Förderschnecke |
| 2 | Getreideschneidwerk | 31 | Fördereinrichtung |
| 3 | Schrägförderer | 32 | Querförderschnecke |
| 4 | Querförderorgan | 33 | Getriebe |
| 5 | Überkehrgutstrom | | |
| 6 | Förderer | | |
| 7 | Dreschwerk | | |
| 8 | Dreschtrommel | | |
| 9 | Dreschkorb | | |
| 10 | Teilstrom | | |
| 11 | Teilstrom | | |
| 12 | Vorbereitungsboden | | |
| 13 | Siebebene | | |
| 14 | Reinigungseinheit | | |
| 15 | Gebläseeinheit | | |
| 16 | Fördereinrichtung | | |
| 17 | Strohleittrommel | | |
| 18 | Hordenschüttler | | |
| 19 | Abscheideorgan | | |
| 20 | Rücklaufboden | | |
| 21 | Körner | | |
| 22 | Körnerstrom | | |
| 23 | Förderelevator | | |
| 24 | Korntank | | |
| 25 | Entleervorrichtung | | |
| 26 | Maschinengehäuse | | |
| 27 | Fahrerkabine | | |
| 28 | Auslaufrohr | | |
| 29 | Achse | | |

## Patentansprüche

1. Mähdrescher (1) mit einem Korntank (24) und einer dem Korntank (24) zugeordneten Entleervorrichtung (25), die zumindest aus einem schwenkbar an dem Mähdrescher (1) angeordneten Auslaufrohr (28) und zumindest einer in dem Auslaufrohr (28) angeordneten antreibbaren Fördereinrichtung (31) besteht, wobei die Fördergeschwindigkeit der Fördereinrichtung (31) variabel einstellbar ist, wobei Auswahl und/oder Anpassung der Fördergeschwindigkeit der Fördereinrichtung (31) selbsttätig erfolgt, **dadurch gekennzeichnet, dass** die selbsttätige Auswahl und/oder Anpassung der Fördergeschwindigkeit der Fördereinrichtung (31) in Abhängigkeit von Sensordaten erfolgt, und dass die Sensordaten mittels eines bilderfassenden Sensors mit entsprechender Bildauswertung erzeugt werden.

2. Mähdrescher (1) nach Anspruch 1, **dadurch gekennzeichnet, dass** die Fördergeschwindigkeit der Fördereinrichtung (31) während des Erntebetriebes des Mähdreschers (1) variabel einstellbar ist.

3. Mähdrescher (1) nach einem der vorstehenden Ansprüche, **dadurch gekennzeichnet, dass** die Fördergeschwindigkeit der Fördereinrichtung (31) vor dem Einschalten der Fördereinrichtung (31) vorwählbar ist und/oder dass die Fördergeschwindigkeit der Fördereinrichtung (31) während des Betreibens der Fördereinrichtung (31) veränderbar ist.

4. Mähdrescher (1) nach einem der vorstehenden Ansprüche, **dadurch gekennzeichnet, dass** die Fördergeschwindigkeit der Fördereinrichtung (31) in Stufen oder stufenlos einstellbar ist.

5. Mähdrescher (1) nach einem der vorstehenden Ansprüche, **dadurch gekennzeichnet, dass** die Einstellung der Fördergeschwindigkeit der Fördereinrichtung (31) mittels eines Getriebes (33) erfolgt.

6. Mähdrescher (1) nach Anspruch 5, **dadurch gekennzeichnet, dass** das Getriebe (33) als Lastschaltgetriebe ausgebildet ist.

7. Mähdrescher (1) nach einem der Ansprüche 5 oder 6, **dadurch gekennzeichnet, dass** das Getriebe (33) als Variator-Getriebe ausgebildet ist.

8. Mähdrescher (1) nach einem der vorstehenden Ansprüche, **dadurch gekennzeichnet, dass** die Fördereinrichtung (31) durch zumindest eine Förderschnecke (30) und/oder zumindest ein endlos umlaufendes Förderband gebildet wird.

9. Mähdrescher (1) nach einem der vorstehenden Ansprüche, **dadurch gekennzeichnet, dass** der Antrieb der Fördereinrichtung (31) mechanisch, hydraulisch und/oder elektromotorisch erfolgt.

## Claims

1. A combine harvester (1) comprising a grain tank (24) and an emptying device (25) which is associated with the grain tank (24) and which comprises at least one discharge pipe (28) arranged pivotably on the combine harvester (1) and at least one drivable conveyor device (31) arranged in the discharge pipe (28), wherein the conveyor speed of the conveyor device (31) is variably adjustable, wherein selection and/or adaptation of the conveyor speed of the conveyor device (31) is effected automatically, **characterised in that** automatic selection and/or adaptation of the conveyor speed of the conveyor device (31) is effected in dependence on sensor data and that the sensor data are generated by means of an image acquisition sensor with corresponding image evaluation.

2. A combine harvester (1) according to claim 1 **characterised in that** the conveyor speed of the conveyor device (31) is variably adjustable during the harvesting operation of the combine harvester (1).

3. A combine harvester (1) according to one of the preceding claims **characterised in that** the conveyor speed of the conveyor device (31) can be preselected before the conveyor device (31) is switched on and/or that the conveyor speed of the conveyor device (31) is variable during operation of the conveyor device (31).

4. A combine harvester (1) according to one of the preceding claims **characterised in that** the conveyor speed of the conveyor device (31) is adjustable in steps or steplessly.

5. A combine harvester (1) according to one of the preceding claims **characterised in that** adjustment of the conveyor speed of the conveyor device (31) is effected by means of a transmission (33).

6. A combine harvester (1) according to claim 5 **characterised in that** the transmission (33) is in the form of a power shift transmission.

7. A combine harvester (1) according to one of claims 5 or 6 **characterised in that** the transmission (33) is in the form of a variator transmission.

8. A combine harvester (1) according to one of the preceding claims **characterised in that** the conveyor device (31) is formed by at least one conveyor screw (30) and/or at least one endlessly circulating conveyor belt.

9. A combine harvester (1) according to one of the preceding claims **characterised in that** the drive of the conveyor device (31) is effected mechanically, hydraulically and/or by electric motor means.

## Revendications

1. Moissonneuse-batteuse (1) comprenant une trémie à grain (24) et un dispositif de vidage (25) qui est associé à la trémie à grain (24) et qui se compose au moins d'un tube de décharge (28) monté pivotant sur la moissonneuse-batteuse (1) et au moins d'un équipement de convoyage entraînable (31) disposé dans le tube de décharge (28), la vitesse de convoyage de l'équipement de convoyage (31) étant réglable de manière variable, la sélection et/ou l'adaptation de la vitesse de convoyage de l'équipement de convoyage (31) s'effectuant automatiquement, **caractérisée en ce que** la sélection et/ou l'adaptation automatiques de la vitesse de convoyage de l'équipement de convoyage (31) s'effectuent en fonction de données de capteur, et **en ce que** les données de capteurs sont générées au moyen d'un capteur d'images avec une analyse d'images correspondante.

2. Moissonneuse-batteuse (1) selon la revendication 1, **caractérisée en ce que** la vitesse de convoyage de l'équipement de convoyage (31) est réglable de manière variable pendant le mode de récolte de la moissonneuse-batteuse (1).

3. Moissonneuse-batteuse (1) selon une des revendications précédentes, **caractérisée en ce que** la vitesse de convoyage de l'équipement de convoyage (31) est présélectionnable avant la mise en marche de l'équipement de convoyage (31) et/ou **en ce que** la vitesse de convoyage de l'équipement de convoyage (31) est modifiable pendant le fonctionnement de l'équipement de convoyage (31).

4. Moissonneuse-batteuse (1) selon une des revendications précédentes, **caractérisée en ce que** la vitesse de convoyage de l'équipement de convoyage (31) est réglable par paliers ou de façon continue.

5. Moissonneuse-batteuse (1) selon une des revendications précédentes, **caractérisée en ce que** le réglage de la vitesse de convoyage de l'équipement de convoyage (31) s'effectue au moyen d'une transmission (33).

6. Moissonneuse-batteuse (1) selon la revendication 5, **caractérisée en ce que** la transmission (33) est conformée en transmission commandée en charge.

7. Moissonneuse-batteuse (1) selon une des revendications 5 ou 6, **caractérisée en ce que** la transmission (33) est conformée en variateur.

8. Moissonneuse-batteuse (1) selon une des revendications précédentes, **caractérisée en ce que** l'équipement de convoyage (31) est formé par au moins une vis de convoyage (30) et/ou par au moins un convoyeur à bande à défilement continu.

9. Moissonneuse-batteuse (1) selon une des revendications précédentes, **caractérisée en ce que** l'entraînement de l'équipement de convoyage (31) s'effectue de manière mécanique, hydraulique et/ou électromotorisée.
